# EUROPEAN PATENT APPLICATION

(11) **EP 4 700 350 A1**
(43) Date of publication of application: **25.02.2026**
(21) Application number: 25189459.8
(22) Date of filing: 14.07.2025
(51) Int. Cl.: G01K 11/3206, G01K 1/14, G01K 3/06, G01K 5/56, G01F 23/00

(54) **A SENSOR ARRANGEMENT AND SYSTEM FOR MEASURING AN AVERAGE TEMPERATURE**

(30) Priority: 22.08.2024 GB 202412363
(71) Applicant: Airbus Operations Limited, Bristol BS34 7PA (GB)
(72) Inventor: WOOD, Christopher, Bristol, BS34 7PA (GB); JAMES, Dylan, Bristol, BS34 7PA (GB)
(74) Representative: Lerwill-Williams, Jonathan Ashley Ronald

(57) **Abstract**

Disclosed is a sensor arrangement, the sensor arrangement comprises: a structure extending along a length, an optical fibre carrier, and an optical fibre sensor carried by the optical fibre carrier. The optical fibre carrier is fixed to the structure proximal to each end of the structure, and is formed of a first carrier portion and a second carrier portion that are movable relative to each other, and is formed substantially of a material having a first coefficient of thermal expansion; the optical fibre sensor has a single measurement point and is fixed to the optical fibre carrier either side of the single measurement point; and the structure is formed of a material having a second coefficient of thermal expansion which is different to the first coefficient of thermal expansion

## Description

### FIELD OF THE INVENTION

The present invention relates to a sensor arrangement and a system for measuring an average temperature along a length.

### BACKGROUND OF THE INVENTION

Optical sensors for determining temperature typically comprise optical fibres with multiple sensing points to allow for temperature to be determined in a number of points along the fibre. Fibre Bragg Gratings (FBGs) are typically used as the sensing points.

EP3569987A1 describes an optical sensor system which could be used, for example, to measure temperature. The optical sensor system described in EP3569987A1 has multiple optical sensors, multiple receivers, and an optical de-multiplexing system. Each optical sensor includes a fibre grating with a different wavelength characteristic. Each receiver includes a slope filter and a light detector and is associated with a respective one of the optical sensors. The optical de-multiplexing system is arranged to route light from each of the optical sensors to its associated receiver based on a wavelength of the light. Each slope filter is tuned to the wavelength characteristic of a respective one of the optical sensors and the slope filters are tuned to different wavelength characteristics.

An alternative system for interrogating multiple sensors could include, for example, a swept laser. However, this would be limited by sweep speed, and would further need a high performance microprocessor to do the necessary Fast Fourier Transform (FFT) algorithms. A further alternative could use a simple white light source, but this would then need to be used in combination with a complex spectral sensor and algorithms.

The systems described above allow for a temperature to be taken from multiple points along an optical fibre sensor, and then an average temperature can be obtained by calculating the average of each of the measured temperatures at each sensing point. Typically there would be in excess of around 2000 sensing points for a system installed in an aircraft fuel tank. However, the systems required to collect these multiple temperatures are complex, expensive, and are computationally intensive.

The present invention seeks to mitigate the above-mentioned problems. Alternatively or additionally, the present invention seeks to provide an improved sensor arrangement for measuring an average temperature along a length.

### SUMMARY OF THE INVENTION

A first aspect of the invention provides a sensor arrangement, the sensor arrangement comprises a structure extending along a length, an optical fibre carrier, and an optical fibre sensor carried by the optical fibre carrier. The optical fibre carrier is fixed to the structure proximal to each end of the structure, and is formed of a first carrier portion and a second carrier portion that are movable relative to each other, and is formed substantially of a material having a first coefficient of thermal expansion; the optical fibre sensor has a single measurement point and is fixed to the optical fibre carrier either side of the single measurement point; and the structure is formed of a material having a second coefficient of thermal expansion which is different to the first coefficient of thermal expansion.

As such, the sensor arrangement has a single measurement point which is influenced by relative movement of each of the carrier portions caused by the thermal expansion and/or contraction temperature of the entire sensor arrangement, and the different coefficients of thermal expansion of the carrier portions compared to the structure. Thus the single measurement point is influenced by any localised temperature fluctuations along the entire length of the sensor arrangement, and can provide a reading equivalent to the average temperature along the entire length of the structure without requiring multiple measurement points along the length, and complex and costly interrogators and computation.

The first and second carrier portions of the optical fibre carrier may be spaced apart, forming a gap therebetween. This provides a space between the carrier portions to allow for relative movement due to thermal expansion or contraction of the entire sensor arrangement.

The single measurement point of the optical fibre sensor may be positioned within the gap formed between the first and second carrier portions. This positions the measurement point at the optimum point to be influenced by the relative movement of each of the carrier portions.

The length of the gap between the first and second carrier portions may be between 0.5mm and 50mm. As a result, the gap is sized to accommodate the measurement point, and allows for any continued thermal expansion or contraction, but while minimising the area where the optical fibre is exposed outside of the optical fibre carrier.

A protective shield may be provided at the gap formed between the first and second carrier portions. This provides some protection for the exposed section of optical fibre against damage.

The optical fibre carrier may be substantially tubular, and the optical fibre sensor may extend through the tubular optical fibre carrier. This allows the optical fibre to extend through the whole sensor, reducing any connections inside the sensor, and could prevent the need to have any electronics or light source inside the environment that is being measured.

The single measurement point of the optical fibre sensor may comprise a Fibre Bragg Grating.

The sensor arrangement may further comprise one or more retention brackets fixed to the structure, and through which the optical fibre carrier is supported with a sliding fit. This allows the optical fibre carrier to be supported, and restricts any unwanted movement due to, for example, vibrations or movements due to sloshing of liquid around the sensor arrangement which could give rise to unwanted noise in the reading from the sensor, or potentially damage the sensor arrangement. However the sliding fit allows the relative movement of each of the carrier portions caused by the thermal expansion and/or contraction temperature of the entire sensor arrangement, and the different coefficients of thermal expansion of the carrier portions compared to the structure.

The structure may have a cross-sectional shape comprising one of a list comprising: flat planar, U-shaped, circular, semi-circular, L-shaped, or I-shaped. Some of the shapes listed could be further beneficial as the shape may help prevent any flexing or twisting of the support structure which can give rise to an offset in a temperature reading from the sensor arrangement. In addition, some of the shapes listed would also help reduce the risk of damage to the exposed section of optical fibre.

The structure may support two or more optical fibre carriers and a corresponding number of optical fibre sensors. As a result, if the structure flexes, each of the optical fibre sensors will provide a different reading depending on the position of the sensor, and an average of the readings from each optical fibre sensor can be used to provide a more accurate reading for the sensor arrangement.

The first coefficient of thermal expansion may be higher than the second coefficient of thermal expansion, such that when the sensor arrangement is exposed to a raise in temperature, there is greater expansion in the optical fibre carrier compared to the structure, and compression strain is imparted to the optical fibre at the single measurement point. Similarly, when there is a drop in temperature, the optical fibre carrier will contract more than the carrier, and will give rise to a stretching strain in the optical fibre at the single measurement point.

Connectors may be provided at each end of the optical fibre carrier to allow it to be daisy-chained with other optical fibre carriers. This allows the sensor arrangement to more easily be used in a larger overall system containing multiple sensor arrangements, but whilst keeping complexity of the system to a minimum.

A second aspect of the invention provides a system for measuring an average temperature along a length, the system comprising: a sensor arrangement as described in any one of the preceding statements; a light source configured to direct light towards the optical fibre sensor; a receiver; and an interrogator for measuring the strain at the single measurement point and then determining the average temperature along the length using the measured strain.

The system may comprise a plurality of sensor arrangements, and a multiplexer for multiplexing and de-multiplexing the signals from the plurality of sensor arrangements.

A third aspect of the invention provides a method of measuring the average temperature of fuel in a fuel tank, where the tank is provided with one or more systems for measuring an average temperature along a length as described on one of the earlier statements, and where each of a plurality of sensor arrangements are installed at different heights within the tank, the method comprising the steps: determining which of the plurality of sensor arrangements are positioned below the fuel level; collecting average temperature readings from each of the sensor arrangements determined to be positioned below the fuel level; and calculating an overall average of the collected average temperature readings.

The step of collecting average temperature readings from each of the sensor arrangements positioned below the fuel level may comprise collecting average temperature readings from all of the sensor arrangements in the system, and then ignoring any average temperature readings from any of the sensor arrangements that were not determined to be positioned below the fuel level.

A fourth aspect of the invention provides an aircraft comprising: a fuel tank; and a system for measuring an average temperature along a length as claimed in one of the previous statements.

It will of course be appreciated that features described in relation to one aspect of the present invention may be incorporated into other aspects of the present invention. For example, the method of the invention may incorporate any of the features described with reference to the apparatus of the invention and vice versa.

### BRIEF DESCRIPTION OF THE DRAWINGS

Embodiments of the invention will now be described, by way of example only, with reference to the accompanying drawings, in which:
Figure 1 shows a sensor arrangement;
Figure 2 is a cross section through a longitudinal axis of the sensor arrangement of Figure 1;
Figure 3 shows a cross section through an axial axis of the sensor arrangement of Figure 1, which shows an optical fibre carrier positioned in a retention bracket fixed to a structure;
Figures 4 to 8 show alternative structure embodiments having different cross-sectional shapes;
Figure 9 shows a tank, and a number of options for sensor arrangement positioning within the tank;
Figure 10 shows a tank comprising a system for measuring an average temperature of the contents of the tank;
Figure 11 shows a half-filled tank comprising an alternative system for measuring an average temperature of the contents of the tank.
Figure 12 shows a schematic representation of a system for measuring an average temperature;
Figure 13 shows a flow diagram representing the steps in a method of measuring the average temperature of fuel in a fuel tank; and
Figure 14 shows an aircraft having a number of fuel tanks each comprising a system for measuring an average temperature of the contents of the tank.

### DETAILED DESCRIPTION OF EMBODIMENT(S)

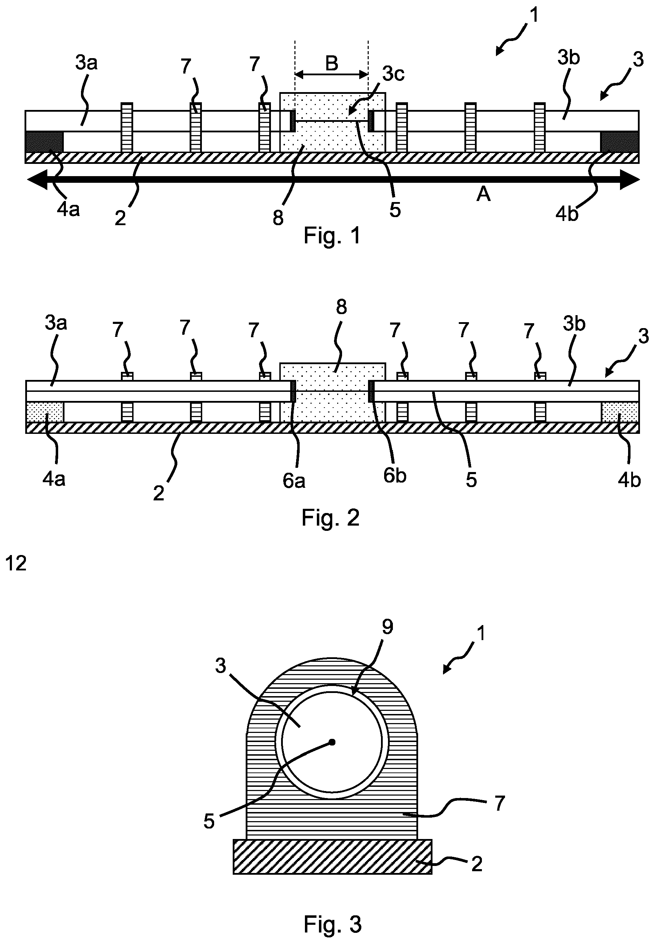

Figure 1 shows a sensor arrangement 1. Figure 2 shows a cross section through the sensor arrangement along its longitudinal axis. The sensor arrangement 1 has a structure 2 that extends along a length indicated by double arrow A. The sensor arrangement 1 also comprises an optical fibre carrier 3 which is formed of two carrier portions 3a and 3b which are spaced apart by a gap 3c having a length indicated by double arrow B. Each optical fibre carrier portion 3a, 3b is fixed to the structure 2 at a point proximal to the end of the structure, with carrier portion 3a fixed at point 4a, and carrier portion 3b fixed at point 4b respectively. The points 4a and 4b are shown in Figures 1 and 2 as blocks and may be, for example, mounting blocks that are fixed to the structure and to the optical fibre carrier by way of an epoxy. In alternative embodiments, the carrier portions 3a, 3b may be welded, screwed or clamped to the structure 2.

The structure 2 is formed of a material with a first coefficient of thermal expansion (CTE), and the optical fibre carrier 3 is formed of a second coefficient of thermal expansion, whereby the first CTE is lower than the second CTE. As a result of this difference in CTE, the structure and the carrier will expand and contract due to differences in temperature to a different magnitude. Typically the structure 2 and the optical fibre carrier 3 will both be metallic, but will be different metals or alloys with different CTEs. The materials selected for each of the structure 2 and the optical fibre carrier 3 to be formed from can be selected in order to achieve an optimum difference in CTE to achieve a desired magnitude of strain on an optical fibre sensor 5 carried within the optical fibre carrier 3 which will now be described.

An optical fibre sensor 5 is carried by the optical fibre carrier 3 and extends through the optical fibre carrier 3 such that a part of the optical fibre sensor 5 which extends through gap 3c is exposed. The optical fibre sensor 5 is fixed to the optical fibre carrier 3 by an epoxy or other adhesive. Where the sensor arrangement 1 is to be used within a cryogenic environment a cryogenic-rated epoxy/adhesive will be used. A single measurement point (not visible in the figures) is located along the optical fibre sensor aligned with the gap 3c, such that the single measurement point is not contained within either of the carrier portions 3a or 3b. The single measurement point is a fibre Bragg grating (FBG).

The optical fibre sensor 5 is fixed to the optical fibre carrier 3 either side of the gap 3c at the points 6a and 6b such that as the carrier portions 3a and 3b expand and contract, strain is imparted to the optical fibre sensor 5 along the section of fibre extending through the gap 3c, and therefore at the point that the single measurement point is located. As such, the single measurement point is influenced by the expansion and contraction of the parts of the sensor arrangement 1 along its entire length, and is therefore able to provide an average reading for the temperature along the entire length of the sensor.

Connectors (not shown) may be provided at each end of the sensor arrangement 1, and in particular at each end of the optical fibre carrier 3 which allow the sensor arrangement to be connected to the rest of a system which will be described in more detail later. In addition, or alternatively, the connectors may allow the sensor arrangement 1 to be daisy-chained to one or more other sensor arrangements.

A number of retention brackets 7 are positioned at regular intervals along the length of the structure 2. Figure 3 shows a cross section axially through the sensor arrangement 1 at a point at which one of the retention brackets 7 is located. The optical fibre carrier 3 extends through the retention brackets with a sliding fit. There may be a gap 9 around the outside of the optical fibre carrier 3 as shown in Figure 3. For the purposes of clarity, the gap 9 shown around the optical fibre sensor 3 is exaggerated, and in practice the clearance between the retention bracket and the optical fibre carrier would likely be much smaller to minimise movement or vibration which may affect the accuracy of any readings from the sensor arrangement 1.

Alternatively, the retention bracket 7 may have a closer fit to the optical fibre carrier, whilst still allowing the optical fibre carrier 3 to slide axially through it. The retention bracket 7 is most likely formed of a material that is capable of withstanding the typical temperatures in the environment in which the sensor arrangement 1 is to be located, whilst minimising any friction that could prevent the optical fibre carrier 3 from sliding axially through it. For example, each retention bracket 7 may be formed of polytetrafluoroethylene (PTFE).

The retention brackets 7 aid to prevent unwanted movement of the optical fibre carrier 3 which could lead to noise in the signal returned from the optical fibre sensor 5, or erroneous results. This unwanted movement could be due to, for example sloshing of liquid in the environment around the sensor arrangement 1.

The sensor arrangement 1 further comprises a protective shield 8 at the location of the gap 3c. This protective shield 8 protects the exposed section of optical fibre sensor 5 from being damaged, for example by physical damage due to any foreign objects that may happen to be in the environment in which the sensor arrangement may be located. The protective shield 8 is shown in Figures 1 and 2 as being fixed to the structure, and it surrounds the gap 3c without any mechanical coupling to the optical fibre carrier 3 which could hinder movement of the carrier portions 3a and 3b relative to each other. In alternative embodiments, the protective shield may be a mesh material fixed to the optical fibre carrier 3 which protects the optical fibre sensor portion within the gap 3c, but which also allows for the relative movement of the carrier portions 3a and 3b due to expansion and contraction.

With the sensor arrangement 1 as described above with the optical fibre carrier 3 having a higher CTE than the structure 2, if the sensor arrangement 1 is located in an environment which is experiencing a drop in temperature, the structure 2 will contract, however the optical fibre carrier 3 will contract to a greater degree due to its higher CTE, and therefore the FBG in the optical fibre sensor 5 will experience a strain caused by it being stretched as each of the carrier portions 3a and 3b contract and the dimension of gap 3c (indicated by the double arrow B) between them increases.

Conversely, if the sensor arrangement 1 is located in an environment which is experiencing a rise in temperature, the structure 2 will expand, however the optical fibre carrier 3 will expand to a greater degree due to its higher CTE, and therefore the FBG in the optical fibre sensor 5 will experience a reduction in strain as each of the carrier portions 3a and 3b expand and the dimension of gap 3c (indicated by the double arrow B) between them decreases.

For a typical sensor arrangement, it is expected that the gap 3c will be between around 0.5mm to 50mm in length, but this will of course depend on the overall size of the sensor arrangement to allow for the expected thermal expansion and contraction. A gap size of between 0.5mm to 50mm is expected to allow for a sufficiently accurate reading to be obtained from the FBG, whilst reducing the amount of exposed optical fibre. The size of the gap will change as the sensor arrangement 1 expands and contracts with fluctuations in temperature. Typically, the longer the sensor arrangement, the greater the degree of expansion and contraction for the same change in temperature, so it is desirable to make the sensor arrangement as long as possible to fit in the environment being measured as that will allow the sensor arrangement to provide the highest possible temperature sensitivity.

When light is shone through the sensor arrangement, and the reflection from the FBG is analysed, the wavelength peak in the reflection will change as the strain changes, and a reading will be able to be taken that gives an indication of the average temperature along the whole length of the sensor arrangement 1.

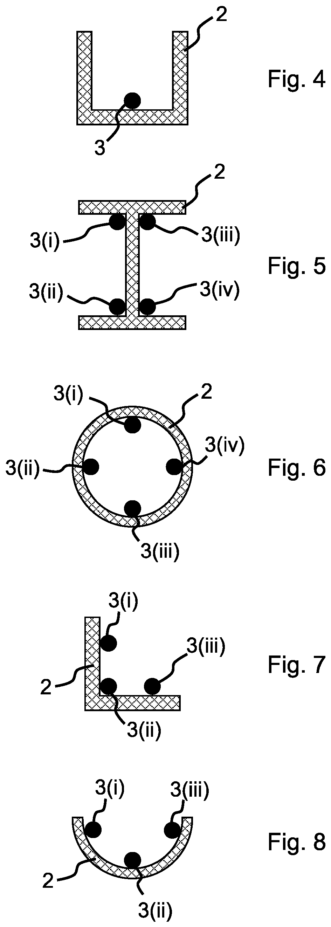

It will be understood that the sensor arrangement is therefore susceptible to fluctuations in accuracy if the sensor arrangement 1 is subjected to flexing. In Figures 1-3, the sensor arrangement 1 comprises a structure 2 with a flat planar cross-sectional shape, which may be more susceptible to flexing to alternative shaped structures. Figure 4 shows a cross-section through an alternative embodiment of the structure 2. In figure 4, the structure 2 has a U-shaped cross-sectional shape which provides greater structural stability and can prevent, or limit the extent of, any flexing of the sensor arrangement 1. The optical fibre carrier 3 is positioned within the cavity formed by the U-shape of the structure 2. This has the added advantage of the structure 2 also providing an enhanced level of protection against damage for the optical fibre sensor 5 carried within the optical fibre carrier 3. For simplicity in the figure, no retention brackets are shown in Figure 4.

Structures having alternative cross-sectional structures will also provide the same benefit. Another way to help reduce the effects of flexing or bending of the sensor arrangement 1 on the accuracy of any measurements is to provide the sensor arrangement 1 with multiple optical fibre sensors and then take an average of the readings from each of the optical fibre sensors. Figures 5, 6, 7 and 8 show a number of alternative embodiments in which the structure 2 has a different cross-sectional shape, and also multiple optical fibre sensors are provided. Again for simplicity in figures 5-8, no retention brackets are shown.

In Figure 5, the structure 2 has an I-shaped cross section, and four optical fibre carriers 3(i)-(iv) run along the protected corners on the inside of the I shape.

In Figure 6, a cylindrical structure 2 has a circular cross section, and again four optical fibre carriers 3(i)-(iv) are fixed to the inside wall of the circular cross section.

In Figure 7, the structure 2 has an L-shaped cross section, and this time three optical fibre carriers 3(i)-(iii) are provided.

In Figure 8, a half-pipe structure 2 has a semi-circular cross section, and three optical fibre carriers 3(i)-(iii) are fixed to the inside wall of the semi-circular cross section.

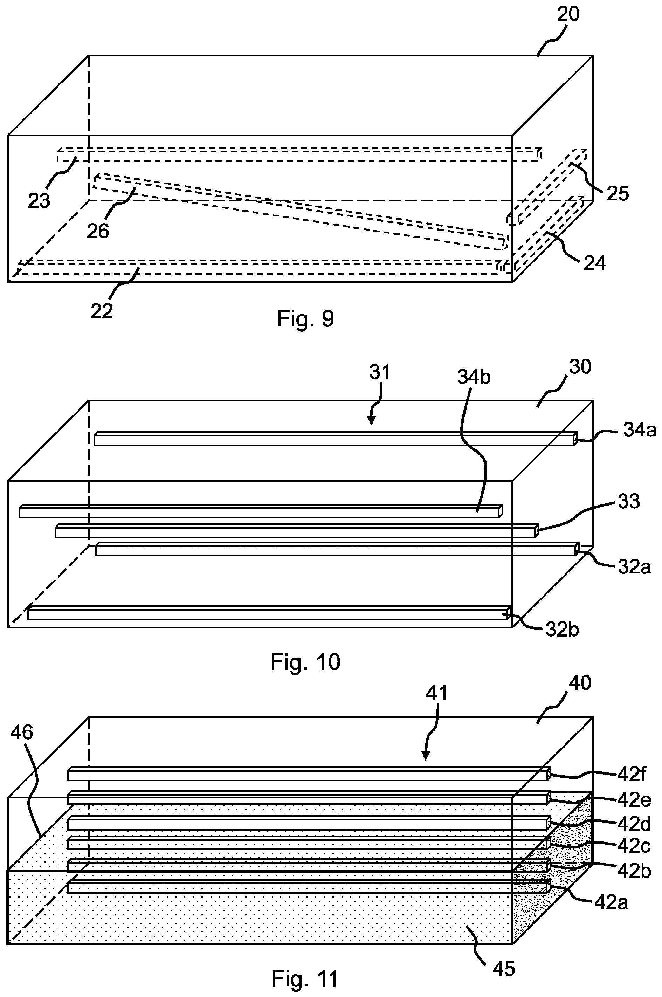

Figure 9 shows a tank 20, for example a fuel tank. A number of options for where sensor arrangements could be positioned within the tank are shown by the dotted indicators 22, 23, 24, 25, 26. Sensor arrangement position 22 is positioned towards the bottom of the tank, aligned along the longest sidewall of the tank. Sensor arrangement position 23 has the same length as sensor arrangement position 22, but instead is located through the middle of the tank. This positioning would allow the sensor arrangement to be influenced less by the temperature of the sidewall of the tank. Sensor arrangement position 24, as with sensor position 22, is positioned towards the bottom of the tank, but instead is aligned along the short sidewall of the tank. Sensor arrangement 25 is in a similar position to sensor position 24, but instead of being located at the bottom of the tank 20, it is instead positioned part-way up the same short sidewall. Finally, sensor arrangement position 26 is shown part-way up the height of the tank, and extends diagonally through the tank.

In a typical system for determining the average temperature of a fluid in the tank 20, it is likely that a number of sensor arrangements will be placed in the tank in a variety of positions in order to get a more accurate reading for the average temperature of the whole fluid contained within the tank. All of the sensor arrangement positions 22-26 are arranged horizontally. This is because the tank 20 is a fuel tank, and the level of liquid, or fuel, in the tank may vary as it is used and drawn from the tank. As such it is important that there aren't some sensors contributing to the calculation of the average temperature of the fuel which are partially (or fully) positioned above the fuel level.

However, it will be understood that in some embodiments it may be desirable to have sensor arrangements positioned non-horizontally. For example a tank may be provided with one or more sensor arrangements that are positioned vertically, or having both vertical and horizontal components to their position within a tank.

Figure 10 shows a tank 30 comprising a system 31 for measuring an average temperature of the contents of the tank 30. In the embodiment of Figure 10, the system 31 comprises five sensor arrangements 32a, 32b, 33, 34a, 34b. Each of these sensor arrangements are the same as the sensor arrangement described above in relation to Figures 1 and 2. Two of the sensor arrangements 32a and 32b are arranged at the bottom of the tank, along each of the longer sidewalls. Sensor arrangement 33 is located partially up the height, and through the middle of the tank 30. Finally, sensor arrangements 34 a and 34b are positioned in the top half of the tank, vertically above sensors 32a and 32b. Sensor arrangements 34a and 34b are not positioned at the very top of the tank, as it is unlikely that fuel will be positioned in that part of the tank very often (or at all depending on how full the tank is able to be filled). As such any sensor arrangements located at the top of the tank would only be used very infrequently, and it is more beneficial to position them partially down the tank where they will be able to be utilised more frequently.

The system 31 will further comprise other components required for an average temperature to be determined which are not shown in Figure 10. For example, the system 31 will likely further comprise connectors between the sensor arrangements 32a, 32b, 33, 34a, 34b, a light source, a receiver and an interrogator. In addition, the system 31 may further comprise one or more fuel level indicators and a multiplexer. These additional components may be positioned inside or outside of tank 30.

Figure 11 shows a tank 40 comprising an alternative system 41 for measuring an average temperature of the contents of the tank 40. The tank 40 contains fuel 45, and in the state shown in Figure 11, the fuel 45 fills around half of the tank 40, with a fuel level 46. The fuel 45 may be, for example, kerosene, a sustainable aviation fuel (SAF), or a cryogenic fuel such as liquid hydrogen. A number of sensor arrangements 42a-f are positioned within the tank 40. In this embodiment each of the sensor arrangements 42a-f are positioned through the middle of the tank with respect to the width of the tank. Sensor arrangement 42a is located at the bottom of the tank, and then the remaining sensor arrangements 42b-f are positioned above sensor arrangement 42a at regular intervals, with the uppermost sensor arrangement 42f positioned just below the top of the tank 40. As with Figure 10, other components required for an average temperature to be determined, such as a light source, a receiver and an interrogator, are not shown in Figure 11.

In use, in the state shown in Figure 11, only readings from the sensor arrangements 42a, 42b, and 42c that are positioned below the fuel level 46 will be used to determine the average temperature of the fuel 45. Readings from sensor arrangements 42d, 42e, and 42f will either be ignored, or not taken at all depending on the capability of the system 41. The fuel level 46 can be determined using a separate fuel level indicator (not shown). Alternatively, it may be possible to determine the fuel level using the array of sensor arrangements 42a-f. For instance, where there is a marked difference in temperature between two adjacent sensor arrangements, it may be deduced that the fuel level is located between those two sensor arrangements. This would help to reduce the number of sensors located in the tank, so may be particularly beneficial.

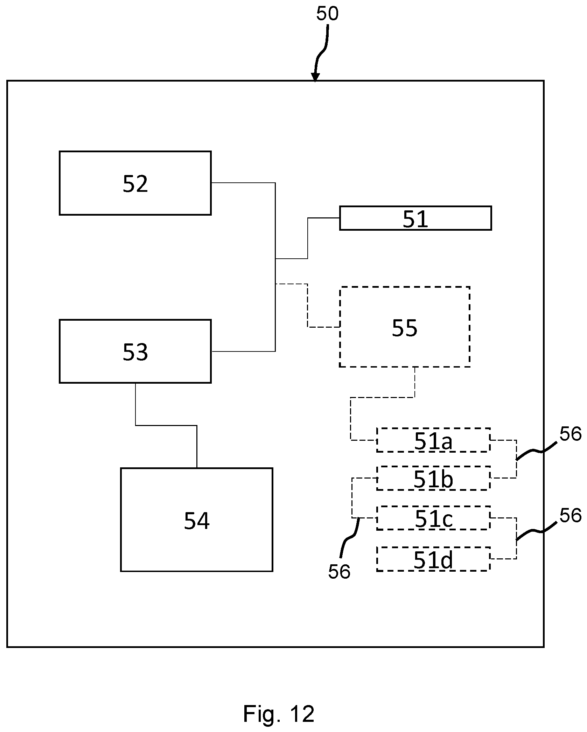

Figure 12 shows a schematic representation of a system 50 for measuring an average temperature such as the systems that would be required in Figures 10 and 11. The system 50 comprises a sensor arrangement 51 such as the sensor arrangement described in Figures 1 and 2. The system also comprises a light source 52 which is configured to direct light towards the optical fibre sensor in the sensor arrangement 51. The light source 52 could be any light source suitable to work with an FBG and may be, for example, a light emitting diode (LED), quartz halogen filament lamp, or a white light or multi-band laser diode such as a multiple quantum well laser diode. Technically any light source could be used although an LED or laser diode is preferable.

The system 50 further comprises a receiver 53 which is an optical receiver for receiving the reflected optical signal from the sensor arrangement 51. An Interrogator 54 is then used to measure the strain at the single measurement point of the optical fibre sensor located within the sensor arrangement 51. The interrogator 54 can then determine the average temperature along the length of the sensor arrangement 21 using the measured strain.

An alternative arrangement is also shown in Figure 12, shown with the dotted components. In this alternative embodiment, the sensor arrangement 51 is replaced with an array of sensor arrangements 51a-d which are daisy-chained together by connectors 56. A multiplexer 55 is provided for multiplexing and de-multiplexing the signals from the plurality of sensor arrangements. In this alternative embodiment, the receiver 53 may be a series of receivers depending on the capabilities of the other components and the requirements of the system 50.

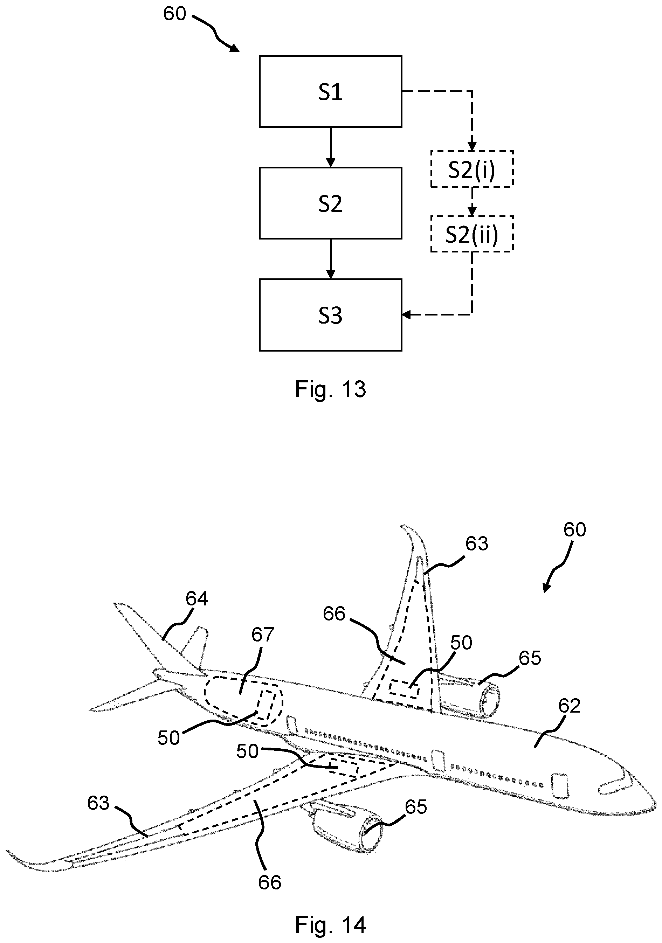

Figure 13 shows a method 60 of measuring the average temperature of fuel in a fuel tank, such as the tank 40 in Figure 11, where the tank is provided with one or more systems for measuring an average temperature along a length, such as the system 50 described in relation to Figure 12, and where each of a plurality of sensor arrangements are installed at different heights within the tank.

In the first step S1, it is determined which of the plurality of sensor arrangements are positioned below the fuel level. This may be carried out using information from a dedicated fuel level sensor or fuel level indicator. Alternatively, as described above, it may be possible to determine the fuel level, or an approximation thereof, from data obtained from the plurality of sensor arrangements themselves.

The second step S2 comprises collecting average temperature readings from each of the sensor arrangements determined to be positioned below the fuel level. This step may be split into smaller steps S2(i) and S2(ii) as indicated by the dotted arrows. In Step S2(i) average temperature readings are collected from all of the sensor arrangements in the system, and then in Step S2(ii) any average temperature readings from any of the sensor arrangements that were not determined to be positioned below the fuel level are removed.

Finally in Step S3, an overall average of the collected average temperature readings is calculated. This is done by adding up all the relevant (i.e. from sensors positioned below the fuel level) average temperature reading values, and then dividing by the number of those relevant readings.

Figure 14 shows an aircraft 60 into which the sensor arrangements, systems or methods previously described could be incorporated or carried out. The aircraft 60 comprises a fuselage 62 and a pair of wings 63. Each wing 63 comprises an engine 65. The engines 65 are shown in the figure as gas turbine engines. However alternative engines or a combination of engine types may be provided, including turbo-prop, hybrid or electric motor driven propeller engines. Each of the wings 63 comprises an in-wing fuel tank 66. In addition to the in-wing fuel tanks 66, an additional fuel tank 67 is provided in the aft section of the fuselage 62 towards the tail 64. Each of these fuel tanks contains a system 50 for measuring an average temperature of the fuel contained within the tank, such as that described in relation to Figure 12.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

In the description above in relation to Figures 1 and 2 it was stated that the coefficient of thermal expansion of the structure (the first CTE) is lower than the CTE of the optical fibre carrier (the second CTE). However, in an alternative embodiment, it may be desirable to have the first CTE higher than the second CTE. In this alternative embodiment, it is mostly the expansion and contraction of the structure that causes the carrier portions to move relative to one another, and give rise to a change in the strain experienced by the FBG.

The above embodiments are to be understood as illustrative examples of the invention. Equivalents and modifications not described above may also be employed without departing from the scope of the invention, which is defined in the accompanying claims.

It is to be understood that any feature described in relation to any one embodiment may be used alone, or in combination with other features described, and may also be used in combination with one or more features of any other of the embodiments, or any combination of any other of the embodiments.

It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

It should be noted that throughout this specification, "or" should be interpreted as "and/or".

Although the invention has been described above mainly in the context of a fixed-wing aircraft application, it may also be advantageously applied to various other applications, including but not limited to applications on vehicles such as helicopters, drones, trains, automobiles and spacecraft.

## Claims

1. A sensor arrangement, the sensor arrangement comprising:
a structure extending along a length;
an optical fibre carrier; and
an optical fibre sensor carried by the optical fibre carrier;
wherein:
the optical fibre carrier is fixed to the structure proximal to each end of the structure, and is formed of a first carrier portion and a second carrier portion that are movable relative to each other, and is formed substantially of a material having a first coefficient of thermal expansion;
the optical fibre sensor has a single measurement point and is fixed to the optical fibre carrier either side of the single measurement point; and
the structure is formed of a material having a second coefficient of thermal expansion which is different to the first coefficient of thermal expansion.

2. A sensor arrangement as claimed in claim 1, wherein the first and second carrier portions of the optical fibre carrier are spaced apart, forming a gap therebetween.

3. A sensor arrangement as claimed in claim 2, wherein the single measurement point of the optical fibre sensor is positioned within the gap formed between the first and second carrier portions.

4. A sensor arrangement as claimed in any one of claims 2 or 3, wherein the length of the gap between between the first and second carrier portions is between 0.5mm and 50mm

5. A sensor arrangement as claimed in any one of claims 2 to 4, wherein a protective shield is provided at the gap formed between the first and second carrier portions.

6. A sensor arrangement as claimed in any one of the preceding claims, wherein the optical fibre carrier is substantially tubular, and the optical fibre sensor extends through the tubular optical fibre carrier.

7. A sensor arrangement as claimed in any one of the preceding claims, wherein the single measurement point of the optical fibre sensor comprises a Fibre Bragg Grating.

8. A sensor arrangement as claimed in any one of the preceding claims, wherein the sensor arrangement further comprises one or more retention brackets fixed to the structure, and through which the optical fibre carrier is supported with a sliding fit.

9. A sensor arrangement as claimed in any one of the preceding claims, wherein the structure has a cross-sectional shape comprising one of a list comprising: flat planar, U-shaped, circular, semi-circular, L-shaped, or I-shaped.

10. A sensor arrangement as claimed in any one of the preceding claims, wherein the structure supports two or more optical fibre carriers and a corresponding number of optical fibre sensors.

11. A sensor arrangement as claimed in any one of the preceding claims, wherein the first coefficient of thermal expansion is higher than the second coefficient of thermal expansion, such that when the sensor arrangement is exposed to a raise in temperature, there is greater expansion in the optical fibre carrier compared to the structure, and strain is imparted to the optical fibre at the single measurement point.

12. A sensor arrangement as claimed in any one of the preceding claims, wherein connectors are provided at each end of the optical fibre carrier to allow it to be daisy-chained with other optical fibre carriers.

13. A system for measuring an average temperature along a length, the system comprising:
a sensor arrangement as claimed in any one of the preceding claims;
a light source configured to direct light towards the optical fibre sensor;
a receiver; and
an interrogator for measuring the strain at the single measurement point and then determining the average temperature along the length using the measured strain.

14. A system as claimed in claim 13, comprising a plurality of sensor arrangements, and a multiplexer for multiplexing and de-multiplexing the signals from the plurality of sensor arrangements.

15. A method of measuring the average temperature of fuel in a fuel tank, where the tank is provided with one or more systems for measuring an average temperature along a length as claimed in one of claims 13 or 14, and where each of a plurality of sensor arrangements are installed at different heights within the tank, the method comprising the steps:
determining which of the plurality of sensor arrangements are positioned below the fuel level;
collecting average temperature readings from each of the sensor arrangements determined to be positioned below the fuel level; and
calculating an overall average of the collected average temperature readings.

16. A method as claimed in claim 15, where in the step of collecting average temperature readings from each of the sensor arrangements positioned below the fuel level comprises collecting average temperature readings from all of the sensor arrangements in the system, and then removing any average temperature readings from any of the sensor arrangements that were not determined to be positioned below the fuel level.

17. An aircraft comprising:
a fuel tank; and
a system for measuring an average temperature along a length as claimed in one of claims 13 or 14.
